# EUROPÄISCHE PATENTSCHRIFT

(11) **EP 3 722 071 B1**
(45) Veröffentlichungstag und Bekanntmachung des Hinweises auf die Patenterteilung: **03.05.2023**
(21) Anmeldenummer: 20163860.8
(22) Anmeldetag: 18.03.2020
(51) Int. Cl.: B29C 63/00, B29C 63/02

(54) **VORRICHTUNG ZUM APPLIZIEREN EINER PERFORIERTEN SCHUTZFOLIE AUF EINE OBERFLÄCHE EINES BAUTEILS**
DEVICE FOR APPLYING A PERFORATED PROTECTIVE FILM TO A SURFACE OF A COMPONENT
DISPOSITIF D'APPLICATION D'UN FILM DE PROTECTION PERFORÉ SUR UNE SURFACE D'UN COMPOSANT

(30) Priorität: 08.04.2019 DE 102019109112
(43) Veröffentlichungstag der Anmeldung: 14.10.2020
(73) Patentinhaber: Somo.Tec GmbH, 18182 Bentwisch (DE)
(72) Erfinder: Mohr, Johannes, 18147 Rostock (DE); Rahmlow, Klaus-Dieter, 23992 Poischendorf (DE)
(74) Vertreter: Grünbaum, Annekathrin

(56) Entgegenhaltungen:
- CN-A- 108 327 239
- CN-U- 205 168 997

## Beschreibung

Die vorliegende Erfindung betrifft eine Vorrichtung zum Applizieren einer perforierten Schutzfolie auf eine Oberfläche eines Bauteils. Eine derartige Vorrichtung ermöglicht ein schnelles automatisiertes Auftragen einer Schutzfolie in hoher Stückzahl.

Insbesondere bei Karosserieteilen von Kraftfahrzeugen wird die frischlackierte Oberfläche zum Schutz für den Transport mit einer Folie abgedeckt, wobei die Folie für viele Anwendungen von Hand aufgeklebt wird, da große Karosserieteile, wie z.B. das Dach, die Haube, der Kofferraumdeckel und die Seitenflächen, in ihrer Größe und Form nicht mit nur einer Maschine beklebt werden können. Außerdem entsprechen die Folienzuschnitte nur in etwa der Form der zu schützenden Oberflächen, wobei der Zuschnitt in der Regel an der einen oder anderen Stelle, insbesondere an abgerundeten Ecken und Kanten übersteht. Das ist beim Einbau der Karosserieteile hinderlich.

In DE 19606395 C1 wird ein Verfahren und eine Vorrichtung zum Applizieren einer Folie auf eine Oberfläche offenbart, bei der die Folie von einer Vorratsrolle abgezogen wird, ein entsprechender Zuschnitt vor, während oder nach dem Aufbringen der Folie auf den zu schützenden Gegenstand ausgeschnitten wird und der Folienrest auf einer Haspel aufgewickelt wird.

Die Veröffentlichung CN 205168997 U betrifft eine Vorrichtung zum Bekleben von Mobiltelefonen mit einer Schutzfolie. Der Grundrahmen besteht im Wesentlichen aus einer horizontalen und einer vertikalen Grundstruktur. Die Vorratsrolle und die Aufwickelrolle für die Folie bzw. Restfolie sind auf der vertikalen Grundstruktur gelagert. Das Mobiltelefon wird mittels eines Schneckenantriebs auf der horizontalen Grundstruktur in Position gebracht. Über Umlenkrollen wird die Folie oberhalb des Mobiltelefons positioniert. Eine Laminierwalze, welche ebenfalls auf der vertikalen Grundstruktur gelagert ist, drückt die Folie nach unten und wird dann zum Aufgetragen über das Mobiltelefon geführt. Dabei wird die Laminierwalze durch einen Linearmotor, der horizontal auf einem Träger angeordnet ist, angetrieben, wobei ein Zylinder vertikal auf dem Linearmotorschlitten angeordnet ist, und die Laminierwalze über eine Zylinderkolbenstange mit diesem Zylinder verbunden ist.

Die Druckschrift CN 108 327 239 A offenbart eine vollautomatische doppelseitige Folienklebeproduktionslinie für ein elektronisches Produkt. Die doppelseitige Folienklebeproduktionslinie ist dadurch gekennzeichnet, dass sie ein Zuführteil, ein oberes Transferteil, ein Vorderseiten-Folienklebeteil, ein Transfer-Wendeteil, ein Rückseiten-Folienklebeteil, ein unteres Transferteil, ein Entladeteil und ein Förderband umfasst; wobei das Förderband nacheinander mit dem Zuführteil, dem oberen Transferteil, dem Vorderseiten-Folienklebeteil, dem Transfer-Wendeteil, einem Rückseiten-Folienklebeteil, dem unteren Transferteil und dem Entladeteil in Verbindung steht; der Rückseiten-Filmklebeteil und der Vorderseiten-Filmklebeteil die gleiche Struktur aufweisen; der untere Transferteil und der obere Transferteil die gleiche Struktur aufweisen; der Entladeteil und der Zuführteil die gleiche Struktur aufweisen; der Rückseiten-Filmklebeteil an der nächsten Station des Transferumkehrteils angeordnet ist; der untere Transferteil an der nächsten Station des Rückseiten-Filmklebeteils angeordnet ist; und der Entladeteil an der nächsten Station des unteren Transferteils angeordnet ist.

In der Druckschrift CN 205 168 997 U ist eine Handy-Film-Klebevorrichtung offenbart, bei welcher zum einen Rollen (2 ,3 und 4) parallel zum Schlitten (8) angeordnet sind und wobei aber dass die Rollen nicht auf dem Schlitten angeordnet sind. Die Handy-Folienklebevorrichtung der D1 verwendet den ersten Motor, um die Aufwickelspule anzutreiben, um die Handy-Folie, die am Förderband befestigt ist, zur horizontalen Folienstation zu drehen, und dann treibt der Zylinder die Laminierwalze an, um ein Ende der Handy-Folie auf das Mobiltelefon herunterzufahren, und dann treibt der Linearmotor den Zylinder an, um sich entlang des Mobiltelefons zu bewegen, so dass die Handy-Folie auf den Bildschirm des Mobiltelefons gedrückt wird.

### Darstellung der Erfindung

Der Erfindung liegt die Aufgabe zugrunde, eine Vorrichtung zu entwickeln, mit welcher eine perforierte Schutzfolie auf eine Oberfläche eines Bauteils appliziert werden kann. Die Vorrichtung soll automatisiert die Zuführung und das mechanische Andrücken der Schutzfolie ermöglichen.

Die Lösung der Aufgabe erfolgt mit den Merkmalen des Hauptanspruchs, wobei die Unteransprüche weitere Ausgestaltungen beschreiben.

Die erfindungsgemäße Vorrichtung zum Applizieren einer perforierten Schutzfolie auf eine Oberfläche eines Bauteils umfasst einen Grundrahmen, mit welchem eine Vorratsrolle zum Abwickeln der Schutzfolie und eine Aufnahmerolle zum Aufwickeln einer Restfolie verbunden sind. Die Schutzfolie ist über wenigstens eine Umlenkrolle geführt und wenigstens eine Andruckrolle dient zum Auftragen der Schutzfolie. Der Grundrahmen besteht im Wesentlichen aus einer horizontalen und einer vertikalen Grundstruktur, welche in einem rechten Winkel miteinander verbunden sind. Mit der horizontalen Grundstruktur steht eine horizontal verfahrbare Bauteilaufnahme und mit der vertikalen Grundstruktur ein auf einer horizontalen Linearführungen horizontal verfahrbarer Schlitten in Wirkverbindung. Eine Lagerung der Vorratsrolle, der Aufnahmerolle, der wenigstens einen Umlenkrolle und der wenigstens einen Andruckrolle erfolgt senkrecht zum Schlitten, wobei diese mit dem Schlitten verbunden sind. Die Schutzfolie ist mit einer Markierung versehen, welche das Ende des Bauteils anzeigt.

In einer Ausführungsform ist das Bauteil auf der Bauteilaufnahme gelagert. Die verfahrbare Bauteilaufnahme steht mit einem Einschalter in Wirkverbindung, welcher durch Einschub der Bauteilaufnahme in die horizontale Grundstruktur die Vorrichtung betriebsbereit schaltet.

In einer weiteren Ausführungsform sind zwei Umlenkrollen und zwei Andruckrollen mit dem Schlitten in der Art verbunden, dass durch die erste Andruckrolle ein perforierter Teil der Schutzfolie auf das Bauteil verbracht wird und durch die zweite Andruckrolle der perforierte Teil auf dem Bauteil fixiert wird. Die Aufnahmerolle und die zweite Umlenkrolle werden angetrieben und laufen synchron mit der Bewegung der Schutzfolie mit.

In einer weiteren Ausführungsform wird die diese Markierung auf der Schutzfolie mittels eines Sensors erfasst, wodurch die erste Andruckrolle vom Bauteil abgehoben wird und die zweite Andruckrolle bis zum Erreichen des Endes des Bauteils weiter die Schutzfolie fixiert. Die zweite Andruckrolle verbleibt auch auf dem Bauteil, bis der Schlitten seine Ausgangsposition wieder erreicht hat.

In einer weiteren Ausführungsform ist die Vorrichtung mit einer speicherprogrammierbaren Steuerung verbunden, wodurch das Applizieren elektronisch gesteuert wird.

Vorteil der Erfindung ist es, dass mit der erfindungsgemäßen Vorrichtung eine gleichmäßige Applikation der Schutzfolie auf das Bauteil erfolgt. Durch die Markierung in der Schutzfolie und das Erkennen mittels eines Sensors, können Dehnungen der Schutzfolie erkannt und ausgeglichen werden.

### Ausführung der Erfindung

Die Erfindung wird anhand eines Ausführungsbeispiels erläutert. Hierzu zeigen
- Figur 1: eine erfindungsgemäße Vorrichtung vor der Applikation eines Bauteils mit einer Schutzfolie in perspektivischer Darstellung,
- Figur 2: die Vorrichtung während der Applikation des Bauteils mit der Schutzfolie in einer Vorderansicht,
- Figur 3: eine in perspektivischer Darstellung von Figur 2, und
- Figur 4: ein Detail einer Vorratsrolle mit der Schutzfolie.

In dem Ausführungsbeispiel werden gleiche Teile mit den gleichen Bezugszeichen versehen. Die Basis für die Vorrichtung bildet ein Grundrahmen 1, welcher in dem Ausführungsbeispiel nur andeutungsweise gezeigt ist. Der Grundrahmen 1 und dessen Anbauteile sind aus Aluminium, wodurch das Gewicht niedrig gehalten werden kann und der Grundrahmen 1 somit transportierbar ist. Alle Verbindungen am Grundrahmen 1 sind lösbar Verbindungen, z.B. Schraubverbindungen, und somit besteht die Möglichkeit, schnell und unkompliziert spezielle Änderungen für verschiedene Bauteile vorzunehmen.

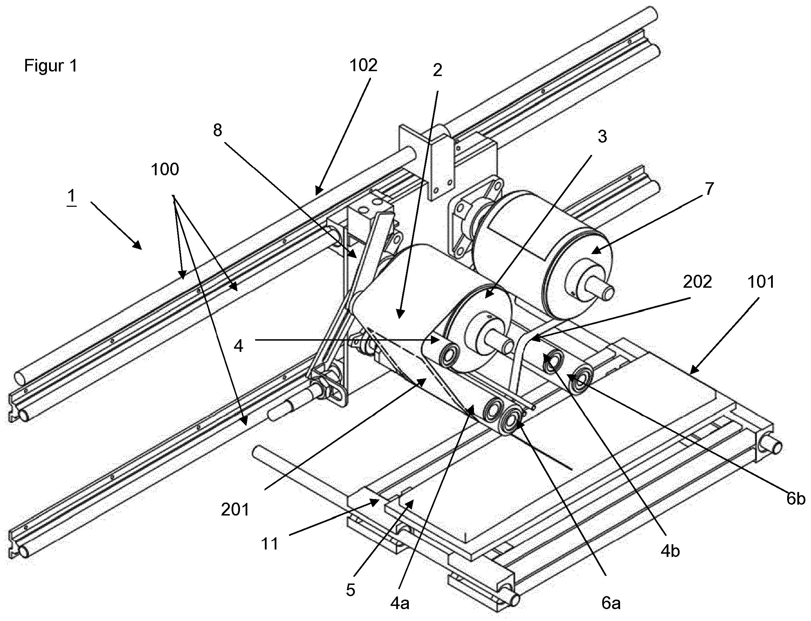

Ein erstes Ausführungsbeispiel wird in Figur 1 gezeigt. Hierbei handelt sich um ein Ausführungsbeispiel der erfindungsgemäßen Applikationsvorrichtung zum Auftragen von perforierter Schutzfolie 2 für die dafür vorgesehenen Bauteile 5. Die Vorrichtung ermöglicht ein schnelles teilautomatisiertes Auftragen der Schutzfolie 2 in hoher Stückzahl, lediglich das zu applizierende Bauteil 5 wird per Hand in die Vorrichtung eingelegt. Die Vorrichtung kann sowohl, wie beschrieben, teilautomatisiert oder vollautomatisch mit einer automatisierten Bauteilzuführung als auch per Hand bedient werden.

Der Grundrahmen 1 besteht im Wesentlichen aus einer horizontalen 101 und einer vertikalen 102 Grundstruktur, welche in einem Winkel von 90 Grad miteinander verbunden sind. Mit der horizontalen Grundstruktur 101 steht eine linear verfahrbare Bauteilaufnahme 11 in Wirkverbindung. Auf der Bauteilaufnahme 11 wird das zu applizierende Bauteil 5 fixiert. Dazu wird die Bauteilaufnahme 11 nach vorne auf der horizontalen Grundstruktur 101 bewegt, ähnlich wie eine Schublade.

Die vertikale Grundstruktur 102 ist mit horizontalen Linearführungen 100 versehen, auf welchen ein Schlitten 8 verfahrbar angeordnet ist. Eine Vorratsrolle 3 für die Schutzfolie 2, wenigstens eine Umlenkrolle 4, zwei Andruckrollen 6 und eine Aufnahmerolle 7 für die Restfolie 202 sind mit dem Schlitten 8 verbunden und können auf diesem horizontal bewegt werden, wobei eine Lagerung der einzelnen Rollen senkrecht zum Schlitten 8 erfolgt. Die Lagerung kann beispielsweise als Flanschlager ausgeführt sein, wodurch ein leichtläufiges Abrollen gewährleistet wird. Die Schutzfolie 2 wird von der Vorratsrolle 3 über eine erste Umlenkrolle 4a und eine erste Andruckrolle 6a, sowie über eine zweite Umlenkrolle 4b zurück zur Aufnahmerolle 7 geführt. Eine zweite Andruckrolle 6b ist unterhalb der Vorratsrolle 3 und der Aufnahmerolle 7 angeordnet, wird aber von der Schutzfolie 2 nicht berührt. Die Aufnahmerolle 7 und die zweite Umlenkrolle 4b sind angetrieben und laufen synchron mit der Bewegung der Schutzfolie 2 mit. Das kann beispielsweise durch eine Seilführung auf der Rückseite der Rollen gewährleistet werden.

Für die Applikation wird die horizontale Grundstruktur 101 mit dem Bauteil 5 unter die Vorratsrolle 3 geschoben. Durch einen Auslöser, welcher pneumatisch oder durch einen Hebelmechanismus aktiviert werden kann, wird die Vorratsrolle 3 mit der Schutzfolie 2 in Richtung Bauteil 5 abgesenkt und die erste Andruckrolle 6a drückt die Schutzfolie 2 auf das Bauteil 5. Nachdem die erste Andruckrolle 6a auf dem Bauteil 5 aufgesetzt hat, beginnt das Applizieren der Schutzfolie 2. Der Applikations-Prozess wird durch eine speicherprogrammierbare Steuerung elektronisch gesteuert.

In die Schutzfolie 2 sind Perforationen entsprechend der zu applizierenden Bauteile 5 eingebracht, diese werden im Folgenden mit perforierter Teil 201 bezeichnet. Von der Vorratsrolle 3 wird die Schutzfolie 2 über ein oder mehrere Umlenkrollen 4 abgerollt. Der perforierte Teil 201 wird auf das Bauteil 5 gebracht, wobei zwischen zwei perforierten Teilen 201 bzw. zu den äußeren Rändern hin Restfolie 202 stehen bleibt. Dazu drückt die erste Andruckrolle 6a den perforierten Teil 201 der Schutzfolie 2 nach dem Auslösen der Applikationsvorrichtung auf das Bauteil 5. Die zweite Andruckrolle 6b setzt etwas später ein. Die erste und zweite Andruckrolle 6a, 6b werden beispielsweise mit Hilfe eines kleinen Druckluftzylinders auf das Bauteil 5 gedrückt.

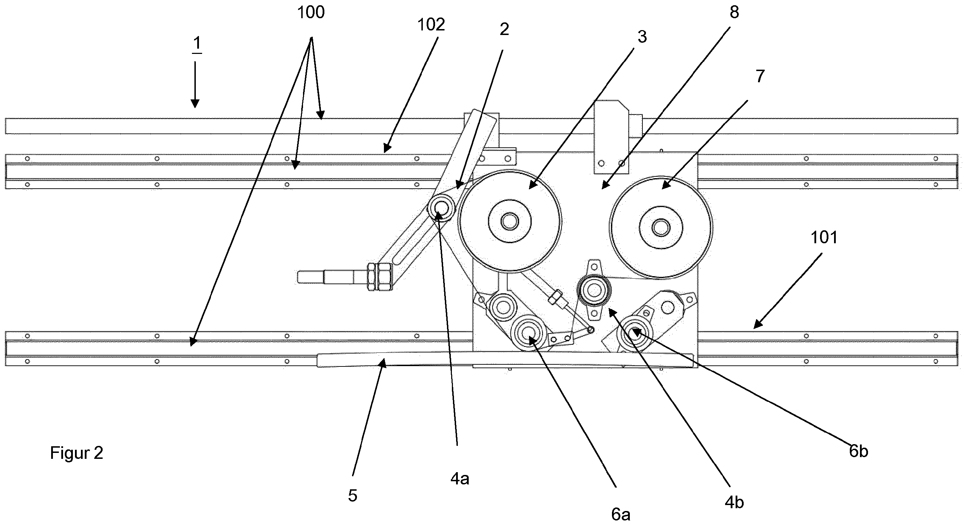

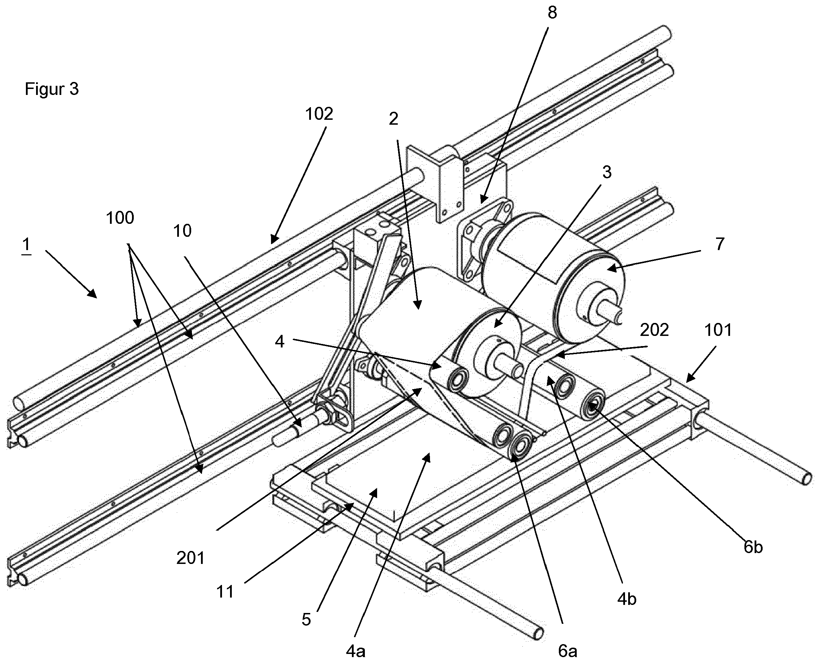

In Figur 2 ist die Vorrichtung in einer Ausgangsposition für die Applikation des Bauteils 5 mit der Schutzfolie 2 und in Figur 3 ist eine perspektivische Darstellung von Figur 2 zu sehen. Das Bauteil 5 ist auf der Bauteilaufnahme 11 gelagert. Durch den Einschub der Bauteilaufnahme 11 mit dem Bauteil 5 in die horizontale Grundstruktur 102 wird ein Einschalter betätigt und die Vorrichtung betriebsbereit geschaltet. Nur wenn der Kontakt geschlossen ist, kann der Applikationsvorgang starten. Zusätzlich wird ein Startknopf betätigt. Die Ablaufsteuerung wird in diesem Beispiel durch Betätigen eines mechanischen Schalters ausgelöst.

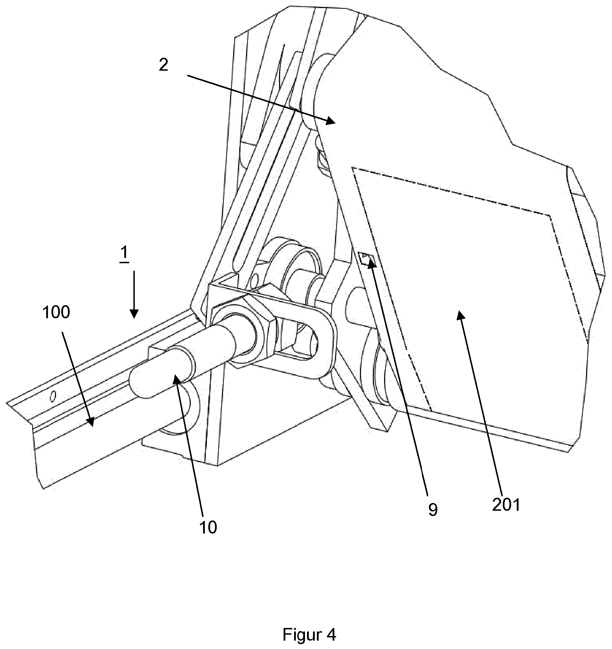

Figur 3 zeigt die Vorrichtung während der Applikation des Bauteils 5 mit der Schutzfolie 2. Die Schutzfolie 2 ist entsprechend der zu applizierenden Oberfläche des Bauteils 5 perforiert und wird oberhalb des Bauteils 5 positioniert. Der Schlitten 8 bewegt sich horizontal von rechts nach links entlang der vertikalen Grundstruktur 102 und damit über das Bauteil 5 hinweg. Die Schlittenbewegung wird z.B. durch eine Spindel ermöglicht, welche durch einen Motor angetrieben wird. Der Motor ist beispielsweise durch einen Zahnriemen an der Spindel angeschlossen. Durch die erste Andruckrolle 6a wird die Schutzfolie 2 auf das Bauteil 5 verbracht. Sobald die zweite Andruckrolle 6b über dem Bauteil 5 ist, wird diese auf das Bauteil 5 geführt und fixiert die Schutzfolie 2 auf dem Bauteil 5. Während der Bewegung des Schlittens 8 über das Bauteil 5 wird einerseits die Schutzfolie 2 von der Vorratsrolle 3 abgewickelt und andererseits die Restfolie 202 auf die Aufnahmerolle 7 aufgewickelt. Eine Markierung 9 auf der Schutzfolie 2 (siehe Figur 4) zeigt das Ende des Bauteils 5. Diese Markierung 9, beispielsweise ein ausgestanztes Quadrat, wird mittels eines Sensors 10, beispielsweise eines optischen Sensors, erfasst. Dadurch wird die erste Andruckrolle 6a vom Bauteil 5 abgehoben. Der Schlitten 8 fährt weiter bis die zweite Andruckrolle 6b das Ende des Bauteils 5 erreicht hat. Anschließend bewegt sich der Schlitten 8 zurück in seine Ausgangsposition, wobei die zweite Andruckrolle 6b auf dem Bauteil 5 verbleibt, um noch einmal die aufgebrachte Schutzfolie 2 anzudrücken und eventuelle Unebenheiten auszugleichen. Durch das gleichzeitige Abwickeln der Schutzfolie 2 von der Vorratsrolle 3 und das Aufwickeln auf die Aufnahmerolle 7 ist bei Erreichen der Ausgangsposition des Schlittens 8 der nächste perforierte Teil 201 der Schutzfolie 2 für eine weitere Applikation freigegeben.

Bei einem Appliziervorgang per Hand wird der Schlitten 8 von rechts nach links bzw. in entgegengesetzte Richtung verfahren. Dies ist allerdings nur für einen Notfall vorgesehen, wenn die Applikation abgebrochen werden muss und der Schlitten 8 wieder in die Ausgangslage gebracht werden muss.

Da es sich bei den vorhergehenden, detailliert beschriebenen Vorrichtung zum Applizieren einer perforierten Schutzfolie 2 auf eine Oberfläche eines Bauteils 5 um ein Ausführungsbeispiel handelt, kann sie in üblicher Weise vom Fachmann in einem weiten Umfang modifiziert werden, ohne den Bereich der Erfindung zu verlassen. Insbesondere können auch die konkreten Ausgestaltungen des Grundrahmens 1 und der Bauteilaufnahme 11 in anderer Form als in der hier beschriebenen folgen, wenn dies aus Platzgründen bzw. designerischen Gründen notwendig ist. Weiter schließt die Verwendung der unbestimmten Artikel "ein" bzw. "eine" nicht aus, dass die betreffenden Merkmale auch mehrfach vorhanden sein können.

## Patentansprüche

1. Vorrichtung zum Applizieren einer perforierten Schutzfolie (2) auf eine Oberfläche eines Bauteils (5), umfassend einen Grundrahmen (1), mit welchem eine Vorratsrolle (3) zum Abwickeln der Schutzfolie (2) und eine Aufnahmerolle (7) zum Aufwickeln einer Restfolie (202) verbunden sind,
ferner aufweisend wenigstens eine Umlenkrolle (4), wobei die Schutzfolie (2) über die wenigstens eine Umlenkrolle (4) geführt ist, und ferner aufweisend wenigstens eine Andruckrolle (6), wobei die wenigstens eine Andruckrolle (6) zum Auftragen der Schutzfolie (2)vorgesehen ist,
wobei der Grundrahmen (1) im Wesentlichen aus einer horizontalen (101) und einer vertikalen (102) Grundstruktur, welche in einem rechten Winkel miteinander verbunden sind, besteht,
wobei mit der horizontalen Grundstruktur (101) eine horizontal verfahrbare Bauteilaufnahme (11) in Wirkverbindung steht,
wobei mit der vertikalen Grundstruktur (102) ein auf einer horizontalen Linearführung (100) horizontal verfahrbarer Schlitten (8) in Wirkverbindung steht, wobei die Vorratsrolle (3), die Aufnahmerolle (7), die wenigstens eine Umlenkrolle (4) und die wenigstens eine Andruckrolle (6) mit dem Schlitten (8) verbunden sind, und
eine Lagerung der Vorratsrolle (3), der Aufnahmerolle (7), der wenigstens einen Umlenkrolle (4) und der wenigstens einen Andruckrolle (6) senkrecht zum Schlitten (8) erfolgt, und ferner aufweisend einen Sensor (10), welcher derart ausgebildet ist, eine Markierung (9), mittels welcher die Schutzfolie (2)versehen ist, welche das Ende des Bauteils (5) anzeigt, zu erfassen.

2. Vorrichtung nach Anspruch 1 **dadurch gekennzeichnet, dass**
die Bauteilaufnahme (11) derart ausgebildet ist, dass das Bauteil (5) auf der Bauteilaufnahme (11) gelagert ist und dass die verfahrbare Bauteilaufnahme (11) mit einem Einschalter in Wirkverbindung steht, welcher derart ausgestaltet ist, dass durch Einschub der Bauteilaufnahme (11) in die horizontale Grundstruktur (102) die Vorrichtung betriebsbereit geschaltet wird.

3. Vorrichtung nach Anspruch 1 oder 2 **dadurch gekennzeichnet, dass** zwei Umlenkrollen (4a, 4b) und zwei Andruckrollen (6a, 6b) mit dem Schlitten (8) in der Art verbunden sind, dass
durch die erste Andruckrolle (6a) ein perforierter Teil (201) der Schutzfolie (2) auf das Bauteil (5) verbracht wird und durch die zweite Andruckrolle (6b) der perforierte Teil (201) auf dem Bauteil (5) fixiert wird.

4. Vorrichtung nach Anspruch 3 **dadurch gekennzeichnet, dass**
die Aufnahmerolle (7) und die zweite Umlenkrolle (4b) antreibbar und derart gelagert sind, dass diese synchron mit der Bewegung der Schutzfolie (2) mit laufen.

5. Vorrichtung nach einem der vorhergehenden Ansprüche ferner aufweisend eine speicherprogrammierbare Steuerung, mittels welcher das Applizieren der perforierten Schutzfolie (2) auf der Oberfläche des Bauteils (5) elektronisch gesteuert wird.

## Claims

1. Device for applying a perforated protective film (2) to a surface of a component (5), comprising a basic frame (1) to which a supply roll (3) for unwinding the protective film (2) and a take-up roll (7) for winding up a remaining film (202) are connected, also having at least one deflecting roll (4), wherein the protective film (2) is guided over the at least one deflecting roll (4), and also having at least one pressure roll (6), wherein the at least one pressure roll (6) is provided for applying the protective film (2),
wherein the basic frame (1) consists substantially of a horizontal (101) and a vertical (102) basic structure, which are connected together at right angles,
wherein a horizontally movable component receptacle (11) is operatively connected to the horizontal basic structure (101),
wherein a carriage (8) that is horizontally movable on a horizontal linear guide (100) is operatively connected to the vertical basic structure (102),
wherein the supply roll (3), the take-up roll (7), the at least one deflection roll (4) and the at least one pressure roll (6) are connected to the carriage (8), and
the supply roll (3), the take-up roll (7), the at least one deflection roll (4) and the at least one pressure roll (6) are mounted perpendicularly to the carriage (8), and also having a sensor (10) which is designed to sense a marking (9) with which the protective film (2) is provided and which indicates the end of the component (5).

2. Device according to Claim 1, **characterized in that** the component receptacle (11) is designed such that the component (5) is mounted on the component receptacle (11), and **in that** the movable component receptacle (11) is operatively connected to a power switch which is configured such that the device is switched into an operational state by insertion of the component receptacle (11) into the horizontal basic structure (102).

3. Device according to Claim 1 or 2, **characterized in that**
two deflection rolls (4a, 4b) and two pressure rolls (6a, 6b) are connected to the carriage (8) such that a perforated part (201) of the protective film (2) is moved onto the component (5) by the first pressure roll (6a) and the perforated part (201) is fixed to the component (5) by the second pressure roll (6b).

4. Device according to Claim 3, **characterized in that** the take-up roll (7) and the second deflection roll (4b) are drivable and are mounted such that they run synchronously with the movement of the protective film (2).

5. Device according to any of the preceding claims, also having a programmable logic controller by means of which the application of the perforated protective film (2) to the surface of the component (5) is electronically controlled.

## Revendications

1. Dispositif d'application d'un film de protection perforé (2) sur une surface d'un composant (5), ledit dispositif comprenant un cadre de base (1) qui relie un rouleau d'alimentation (3) destiné à dérouler le film de protection (2) et un rouleau de réception (7) destiné à enrouler un film restant (202),
ledit dispositif comportant en outre au moins un rouleau de déviation (4), le film de protection (2) étant guidé par l'au moins un rouleau de déviation (4), et comportant en outre au moins un rouleau presseur (6), l'au moins un rouleau presseur (6) étant prévu pour appliquer le film de protection (2),
le cadre de base (1) comprenant sensiblement une structure de base horizontale (101) et une structure de base verticale (102) qui sont reliées l'une à l'autre à angle droit,
un support de composant (11) mobile horizontalement étant en liaison fonctionnelle avec la structure de base horizontale (101),
un chariot (8) mobile horizontalement sur un guide linéaire horizontal (100) étant relié fonctionnellement à la structure de base verticale (102),
le rouleau d'alimentation (3), le rouleau de réception (7), l'au moins un rouleau de déviation (4) et l'au moins un rouleau presseur (6) étant reliés au chariot (8), et
le rouleau d'alimentation (3), le rouleau de réception (7), l'au moins un rouleau de déviation (4) et l'au moins un rouleau presseur (6) étant montés sur paliers perpendiculairement au chariot (8), et comportant en outre un capteur (10) qui est conçu pour détecter une marque (9) dont le film de protection (2) est pourvu et qui indique l'extrémité du composant (5).

2. Dispositif selon la revendication 1, **caractérisé en ce que**
le support de composant (11) est conçu de manière à ce que le composant (5) soit monté sur le support de composant (11) et que le support de composant mobile (11) soit relié fonctionnellement à un commutateur qui est conçu de manière à ce que l'insertion du support de composant (11) dans la structure de base horizontale (102) fait passer le dispositif dans un mode prêt à fonctionner.

3. Dispositif selon la revendication 1 ou 2, **caractérisé en ce que**
deux rouleaux de déviation (4a, 4b) et deux rouleaux presseurs (6a, 6b) sont reliés au chariot (8) de manière à amener une partie perforée (201) du film de protection (2) sur le composant (5) par le biais du premier rouleau presseur (6a) et fixer la partie perforée (201) sur le composant (5) par le biais du deuxième rouleau presseur (6b).

4. Dispositif selon la revendication 3, **caractérisé en ce que** le rouleau de réception (7) et le deuxième rouleau de déviation (4b) peuvent être entraînés et sont montés de manière synchrone avec le mouvement du film de protection (2).

5. Dispositif selon l'une des revendications précédentes comprenant en outre une commande programmable par mémoire permettant de commander électroniquement l'application du film de protection perforé (2) sur la surface du composant (5).
